(19) Europäisches Patentamt
European Patent Office
Office européen des brevets

(11) Numéro de publication : **0 031 761**
**B1**

# (12) FASCICULE DE BREVET EUROPÉEN

(45) Date de publication du fascicule du brevet : **29.02.84**

(51) Int. Cl.[3] : **C 07 F 9/53**, C 08 F230/02, C 08 L 25/18

(21) Numéro de dépôt : **80401815.8**

(22) Date de dépôt : **18.12.80**

## (54) Procédé de synthèse d'oxydes de phosphines tertiaires et oxydes de phosphines tertiaires gréffés sur une chaîne polymérique.

(30) Priorité : **28.12.79 FR 7931917**

(43) Date de publication de la demande : **08.07.81 Bulletin 81/27**

(45) Mention de la délivrance du brevet : **29.02.84 Bulletin 84/09**

(84) Etats contractants désignés : **CH DE FR GB IT LI**

(56) Documents cités :
**DE-B- 1 167 831**
**FR-A- 2 235 132**
**FR-E- 79 805**
**US-A- 2 642 461**
**US-A- 3 161 667**
**CHEMICAL ABSTRACTS, vol. 83, 29-09-1975, page 505, abrégé 113828h Columbus, Ohio, US A.W. HERRIOTT et al.: "Phase-transfer synthesis of sulfides and dithioacetals"**

(73) Titulaire : **SOCIETE NATIONALE DES POUDRES ET EXPLOSIFS**
**12, quai Henri IV**
**F-75181 Paris Cedex 04 (FR)**

(72) Inventeur : **Boileau, Sylvie**
**38-40, rue des Cordelières**
**F-75013 Paris (FR)**
Inventeur : **N'Guyen, Thanh-Dung**
**48, rue de Montreuil**
**F-75011 Paris (FR)**
Inventeur : **Gautier, Jean-Claude**
**1, rue Brossolette**
**F-94480 Ablon Sur Seine (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 031 761 B1

Jouve, 18, rue St-Denis, 75001 Paris, France

Procédé de synthèse d'oxydes de phosphines tertiaires et oxydes de phosphines tertiaires greffés sur une chaîne polymérique

L'invention concerne la synthèse des oxydes de phosphines tertiaires ainsi que certains oxydes de phosphines tertiaires greffés sur une chaîne polymérique en tant que produits nouveaux.

On a proposé dans le passé des procédés très divers pour la synthèse des oxydes des phosphines tertiaires.

Certains de ces procédés mettent en œuvre un réactif de Grignard en relation soit avec l'oxychlorure de phosphore, comme dans le brevet français 2 159 716 de la demanderesse, ou avec un mélange de trichlorure de phosphore et d'oxygène comme dans le brevet français 1 399 743, soit avec un chlorure de phosphonyle comme dans le brevet américain 3 258 492, soit encore avec un dialkylphosphite et un halogénure organique comme dans le brevet français 2 346 361.

D'autres procédés font appel à une technique de décomposition thermique par exemple du produit résultant de l'addition d'un oxyde d'un dialkylphosphite sur une α-oléfine comme dans le brevet allemand 1 912 708, d'un halogénure de phosphonium quaternaire comme dans le brevet français 2 316 244, d'un halogénure de phosphonium quaternaire hydroxylé comme dans le brevet américain 3 997 611, ou encore d'une hydroxyméthyl phosphine tertiaire comme dans le brevet américain 4 020 110.

D'autres procédés encore font intervenir le phosphore et un iodure d'alcoyle en présence d'iode comme dans le brevet français 2 352 824.

Ce qui caractérise ces procédés connus est une certaine lourdeur, l'existence de réactions secondaires difficiles à maitriser et l'emploi de conditions opératoires drastiques, notamment en ce qui concerne la température et les solvants qui doivent être secs.

D'autres procédés ont encore été proposés qui font appel à la réaction d'un composé halogéno méthylé sur un oxyde de phosphine secondaire en présence d'une base comme dans le brevet français 2 235 132 où l'on fait réagir un oxyde de bis(cyano-2 éthyl)phosphine sur un composé halogéno méthylé aromatique en présence d'une base alcaline dans un alcool ou, comme dans le brevet allemand 1 167 831, où l'on fait réagir un oxyde de phosphine aromatique secondaire sur un dérivé halogéno méthylé en présence d'une base organométallique en solution alcoolique. Ce qui caractérise ces procédés c'est l'obligation d'effectuer la réaction dans un solvant alcoolique donc protique avec tous les risques de réactions secondaires que cela peut comporter, qui plus est, en présence d'une base forte. Par ailleurs ils ne permettent pas d'accéder facilement à des oxydes de phosphines du type RRR'PO où R' est une chaîne polymérique de haut poids moléculaire.

La demanderesse a maintenant trouvé un procédé de synthèse d'oxydes de phosphine mettant en œuvre des conditions relativement douces et simples, ne donnant pas lieu à des réactions secondaires et ne nécessitant pas de solvants secs.

Le procédé selon l'invention est un procédé de synthèse d'oxydes de phosphines tertiaires à partir d'un oxyde de phosphine secondaire et d'un dérivé halogéno méthylé en présence d'une base, caractérisé en ce qu'on fait réagir, sous agitation, dans un milieu organique, non miscible à l'eau, un oxyde de phosphine secondaire sur un dérivé halogéno méthylé, en présence d'une phase aqueuse renfermant une base minérale, en présence d'un catalyseur de transfert de phase choisi dans le groupe constitué par les sels d'ammonium, de phosphonium ou d'arsonium quaternaires de formule générale

$$A_1A_2A_3A_4\ Y^+,\ X^-$$

où Y = N, P ou As
où $A_1$, $A_2$, $A_3$ et $A_4$ sont identiques ou différents et sont de préférence des groupes alkyle de $C_1$ à $C_8$, des groupes benzyle ou des chaînes de polymère et où $X^-$ est un anion ou dans le groupe constitué par les polyoxydes d'éthylène, les éthers-couronnes et les cryptants.

Soulignons que si le mécanisme du transfert de phase est connu pour d'autres réactions comme la préparation de sulfures et de dithioacétals, cette réaction n'a jamais été appliquée au procédé de synthèse d'oxydes de phosphines tertiaires.

Selon une variante préférée du procédé selon l'invention, les oxydes de phosphines secondaires utilisés ont pour formule générale

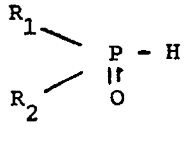

où $R_1$ et $R_2$ sont identiques ou différents et sont un groupe alkyle linéaire ou ramifié comportant de 1 à 18 atomes de carbone, de préférence de 1 à 12 atomes de carbone ou encore un groupe phényle. On peut citer comme oxydes de phosphine particulièrement convenables, les phosphines oxydes de diéthyle, di-n-propyle, di-n-butyle, di-n-hexyle, di(éthyl-2 hexyle), di-n-octyle, di-n-dodécyle, de méthyle et d'octyle, d'éthyle et de butyle, d'éthyle et d'heptyle, d'éthyle et de nonyle, de propyle et d'octyle, de diphényle, etc.

Des dérivés halogéno méthylés entrant bien dans le cadre de l'invention sont notamment ceux de formule générale $XCH_2R$ dans laquelle :

X est un atome de chlore ou de brome et,

R est un groupe $—CH = CHY$ où Y est un atome d'hydrogène, un groupe phényle ou un groupe $—CH_2X$ dans lequel X a l'une des significations indiquées plus haut ou bien,

R est un groupe

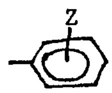

où Z est un atome d'hydrogène, un groupe alkyle de $C_1$ à $C_4$, un groupe vinyle, un atome d'halogène, un groupe $—CH_2X$ ou un groupe

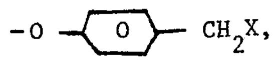

X ayant l'une des significations indiquées plus haut, ou bien,

R est une chaîne alkyle comprenant de 1 à 12 atomes de carbone, éventuellement substituée par au moins un groupe nitrile ou époxy, ou bien,

R est un groupe phényle faisant partie d'une chaîne de copolymère statistique de styrène et de p-halogéno méthyl styrène de masse moléculaire comprise entre 500 et 1 000 000 et comprenant x et y motifs

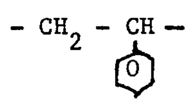 et 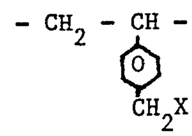

respectivement, x et y étant des nombres entiers tels que le rapport x : y soit compris entre 100 : 1 et 0 : 1, ou bien encore,

R est un groupe phényle faisant partie d'une chaîne de copolymère statistique de styrène et de halogéno méthyl styrène, partiellement réticulé, dite de Merrifield, de masse moléculaire comprise entre 1 000 et 1 000 000 et comprenant x, y et z motifs

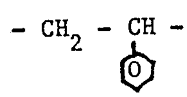 , 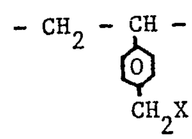 et 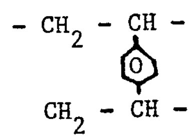

respectivement x, y et z étant des nombres entiers tels que le rapport x : y soit compris entre 100 : 1 et 0 : 1 et que le rapport z : y soit compris entre 1 : 25 et 1 : 5.

On utilise de préférence un dérivé halogéno méthylé non isolément sensible aux bases minérales fortes, c'est-à-dire un dérivé qui mis seul en présence d'une telle base ne réagit pas, ni ne se dégrade rapidement.

Le solvant organique utilisé dans le cadre de l'invention doit être un solvant commun à l'oxyde de dialkyl phosphine et au dérivé halogéno méthylé, ne doit pas être miscible avec la phase aqueuse alcaline et doit être de préférence peu ou pas polaire, c'est-à-dire présenter une constante diélectrique inférieure à 8, à 20 °C. La proticité du solvant est indifférente. Comme solvants convenant bien, on peut citer les solvants aromatiques tels que le benzène, le toluène, les xylènes et les solvants aliphatiques. Les mélanges de solvants sont également convenables. On peut aussi opérer en masse, sans solvant.

La phase alcaline aqueuse doit renfermer une quantité de base alcaline minérale au moins égale à la stœchiométrie de la réaction qui consiste globalement en une condensation avec libération d'une molécule d'acide halohydrique par molécule de dérivé halogéno méthylé.

La phase alcaline aqueuse doit contenir en pratique de 30 % à 60 % en poids d'une base minérale. Celle-ci est de préférence de la soude ou de la potasse, bien que d'autres bases, telles que la chaux peuvent être utilisées.

Le rapport des volumes de phase aqueuse et de phase organique n'est pas fortement critique mais en pratique se situe entre les valeurs extrêmes 5 : 1 et 1. L'agitation du milieu réactionnel est souhaitable de manière à favoriser le contact entre les phases organiques et aqueuses. Une agitation vigoureuse est de nature à accélérer considérablement la vitesse de réaction.

La réaction n'est pas sensible à la pression de sorte qu'opérer sous la pression atmosphérique convient bien. En revanche, la température est un facteur critique puisqu'en dessous de 0 °C la réaction est extrêmement lente voire inexistante et qu'au-dessus de 90 °C la réaction est pratiquement très difficile à mener à bien et s'accompagne d'une dégradation des produits formés. Une température comprise entre 40 et 70 °C aboutit aux meilleurs résultats, en général. Il est avantageux d'opérer sous atmosphère inerte constituée d'argon ou d'azote. Lorsqu'un rendement élevé est recherché par rapport au dérivé halogéné (respectivement, par rapport à l'oxyde de phosphine), il est important d'employer une quantité d'oxyde de phosphine secondaire (respectivement de dérivé halogéno méthylé) au moins égale à la stoéchiométrie par rapport au dérivé halogéno méthylé (respectivement, par rapport à l'oxyde de phosphine).

Toutefois, le rapport molaire P/C1 s'il est avantageusement supérieur à 1 n'est pas utilement supérieur à 1,5 sauf dans le cas où le dérivé halogéno méthylé est une résine, notamment du type copolymère statistique indiqué plus haut.

La concentration des réactifs dans la phase organique est quant à elle en pratique comprise entre 1 et 20 % en poids par rapport au solvant et entre 0,1 et 10 % si le réactif est un polymère. Toutefois on peut aussi opérer en masse.

Le temps de réaction varie de quelques dizaines de minutes à quelques dizaines d'heures suivant la température utilisée et surtout suivant la nature du catalyseur de transfert de phase utilisé.

Les catalyseurs de transfert de phase dont l'utilisation est absolument indispensable dans le cadre de la présente invention sont ceux utilisés classiquement dans les réactions de catalyse par transfert de phase. On peut discerner deux groupes de tels catalyseurs.

Le premier groupe est constitué par les catalyseurs de transfert de phase ioniques parmi lesquels on distingue les sels d'ammonium, de phosphonium ou d'arsonium quaternaires de formule générale

$$A_1A_2A_3A_4\ Y^+,\ X^-$$

où Y = N, P ou As,

où $A_1$, $A_2$, $A_3$ et $A_4$ sont identiques ou différents et sont de préférence des groupes alkyle de $C_1$ à $C_8$, des groupes benzyle ou des chaînes de polymère et où $X^-$ est un anion. De préférence, $X^-$ est un anion halogénure, carbonylate, hydrogénosulfate ou hydroxy. Le second groupe est constitué par des complexants non ioniques parmi lesquels on distingue les polyoxydes d'éthylène, les éthers-couronne et les cryptants. Les éthers-couronne sont des polyéthers macrocycliques où certains atomes d'oxygène peuvent être substitués par des atomes de soufre tandis que les cryptants sont des macrohétéro polycycles comprenant des hétérocycles polyéthers où certains atomes d'oxygène peuvent être remplacés par du soufre, les dits hétérocycles étant pontés par des atomes d'azote. Ces agents complexants ont la propriété de former avec les cations alcalins et alcalino-terreux des complexes jouissant d'une constante de stabilité extrêmement élevée. Ils sont largement décrits dans Jean-Marie LEHN, Design of Organic Complexing Agents — Strategies towards properties, Structure and Bonding, Volume 16, Springer Verlag, (1973), dans un article de E. VOGTLE et E. WEBER paru dans Kontakte, Volume 1, page 11 à 31, (1977) et intitulé Neutrale Organische Komplexliganden und ihre Alkalikomplexe — Kronenäther, Cryptanden, Podanden, ainsi que dans les brevets français 2 201 304 et 2 398 079. Les éthers couronnes et les cryptants peuvent être utilisés soit sous forme de molécules libres, soit sous forme fixée à un polymère. Cette dernière solution n'est toutefois pas recommandable quand le dérivé halogéno méthylé est lui-même un polymère. Parmi les éthers-couronne et les cryptants on préfère utiliser ceux qui forment avec le cation de la base alcaline employée les complexes dont la constante de stabilité est particulièrement élevée. L'homme de métier connaît bien les complexants de ce type qui sont particulièrement préférés. On peut utilement se reporter à l'article de C. Kappenstein paru dans le Bulletin de la Société Chimique de France, n° 1-2, pages 89 à 109, (1974). Ainsi si la soude est employée dans la phase aqueuse, on utilise avec avantage l'hexa-oxa-1,4,7,10,13,16 cyclo-octadecadiène-2,11, ou le dibenzo-18 couronne-6 selon la nomenclature de Pedersen, J.A.C.S., 1967, 89, page 7017, le cyclohexyl-15 couronne-5, le 18-couronne-6, le dicyclohexyl-18-couronne-6 ou bien les cryptants <222>, <221> désignés selon la nomenclature de J.-M. LEHN (op. cit.) et de Kappenstein (op. cit.). A la potasse on associe avantageusement le 18-couronne-6, le dicyclohexyl-18-couronne-6 et le cyclohexyl-18-couronne-6, le <222>, le <221> et le <322>. Enfin, si on utilise la chaux, on est sensiblement replacé dans les mêmes conditions qu'avec $Na^+$ et on emploie avantageusement le 18-couronne-6 ou le dicyclohexyl-18-couronne-6 ou bien le <222>, le <221>, ou bien encore les cryptants fixés sur polymère commercialisés par la société MERCK sous les noms de Kryptofix <222> B polymer ou kryptofix <221> B polymer où le reste polymère dérive d'une résine de Merrifield. Bien d'autres éthers-couronne ou cryptants conviennent parfaitement dans le cadre de l'invention, mais il s'agit de composés qui font figure de curiosités de laboratoire.

Bien que les complexants macrohétérocycliques donnent généralement toute satisfaction dans le cadre de l'invention, on leur préfère en règle générale les sels d'ammoniums quaternaires, qui sont au moins aussi efficaces et bien moins coûteux. Les sels de phosphonium ou d'arsonium ont quant à eux une activité généralement identique à celle des sels d'ammoniums quaternaires correspondants, mais sont en revanche sensiblement plus coûteux.

La quantité de catalyseur à utiliser est de l'ordre d'au moins 1 % en mole par rapport à l'halogène contenu par le dérivé halogéno méthylé. Avantageusement on utilisera en fait une proportion d'environ 5 % en mole. Un excès de catalyseur supérieur à 10 % en mole n'apparaît ni comme nuisible, ni comme utile.

Il faut noter qu'il est classiquement admis dans le domaine de la catalyse par transfert de phase (Makosza et coll., J. Org. Chem. *43,* 4682 (1978)) que les carbonates de sodium ou de potassium associés à un catalyseur de transfert de phase tel que le dicyclohexyl-18-couronne-6 constituent d'excellentes bases pour ce genre de réaction. Il s'est avéré que dans le cadre de l'invention ces associations ont une activité plutôt moyenne puisqu'on n'obtient avec elles que des rendements moyens à faibles, surtout dans le cas de dérivés halogéno méthylés polymérisés. Ce phénomène surprenant n'a pas reçu d'explication. Une fois la réaction achevée, le milieu réactionnel est refroidi, la phase organique séparée de la phase aqueuse, puis traitée. Ce traitement peut constituer en un lavage à l'aide d'une solution acide diluée, éventuellement après dilution de ladite phase organique, à l'aide d'un solvant organique. Ce traitement peut aussi consister, dans le cas où le dérivé halogéno méthylé est un polymère, à précipiter d'abord le mélange dans le méthanol et à purifier le précipité par dissolutions dans le chloroforme et reprécipitations dans le méthanol, successives.

Les rendements obtenus par le procédé selon l'invention sont généralement extrêmement élevés notamment s'agissant au départ de micromolécules halogéno méthylées pour lesquelles lesdits rendements avoisinent régulièrement 95 à 100 %. Dans le cas des résines il est possible de moduler facilement le taux de substitution entre 10 et 90 %, en jouant sur le solvant et surtout sur le catalyseur utilisés, ainsi que sur le temps de réaction et la température.

L'invention concerne également des produits industriels nouveaux de formule générale

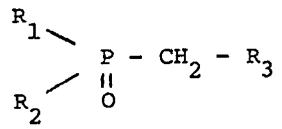

où $R_1$ et $R_2$ sont identiques ou différents et sont un groupe alkyle linéaire ou ramifié comportant de 1 à 18 atomes de carbone, de préférence de 1 à 12 atomes de carbone ou un groupe phényle et où $R_3$ est choisi dans le groupe constitué par :

a) un groupe phényle figurant dans un des motifs

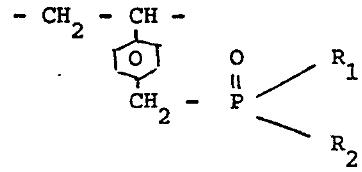

d'un copolymère statistique dérivé d'un copolymère statistique de styrène et de p-halogéno méthyl styrène, de masse moléculaire comprise entre 550 et 1 100 000, comprenant x et y motifs

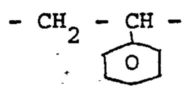 et 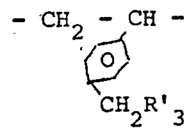

respectivement, x et y étant des nombres entiers tels que le rapport x : y soit compris entre 100 : 1 et 0 : 1, 20 à 90 % en nombre des $R_3'$ étant un groupe

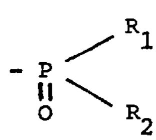

et 10 à 80 % un atome de chlore ou de brome,

b) un groupe phényle figurant dans un des motifs

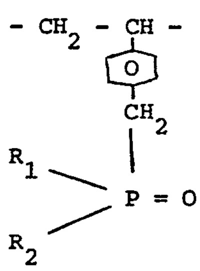

d'un copolymère statistique dérivé d'un copolymère statistique de styrène et de p-halogéno méthyl styrène partiellement réticulé, dit de Merrifield, de masse moléculaire comprise entre 1 100 et 1 100 000, comprenant x, y et z motifs

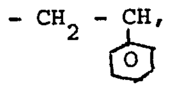
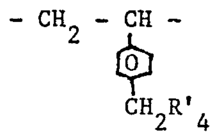
et
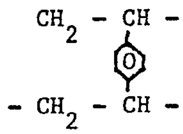

respectivement, x, y et z étant des nombres entiers tels que le rapport x : y soit compris entre 100 : 1 et 0 : 1 et que le rapport z : y soit compris entre 1 : 25 et 1 : 5, 20 à 95 % en nombre des $R_4'$ étant des groupes

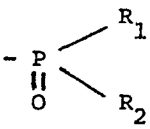

5 à 80 % des atomes de chlore ou de brome.

Des produits selon l'invention qui sont particulièrement préférés sont ceux qui portent des radicaux n-octyle en tant que $R_1$ et $R_2$.

Les produits selon l'invention trouvent notamment leur application dans les formulations phytosanitaires, comme composés ignifuges et comme agents extractants.

L'invention est encore illustrée par les exemples non limitatifs suivants, effectués sous atmosphère d'azote sauf stipulations expressément contraires.

Les oxydes de phosphines secondaires utilisés dans les exemples ont été obtenus par réaction du phosphite de diéthyle sur du chlorure d'alkyl ou de phényl magnésium, dans le THF à reflux selon la méthode décrite par R. H. WILLIAMS et L. A. HAMILTON, Journal of American Chemical Society, 74, 5418, (1952) et 77, 3411 (1955).

## Exemple 1

On a agité un mélange hétérogène composé d'oxyde de dioctyl phosphine (DOPO) (5,3 mM), de 15 ml de toluène, de chlorure de benzyle (7,9 mM) de 5 ml d'une solution aqueuse de soude à 50 % en poids et d'un catalyseur de transfert de phase, le sulfate acide de tétrabutylammonium (ci-après dénommé TBAH) à raison de 0,16 mM.

Ce mélange a été agité pendant 3 heures à 65 °C sous atmosphère d'azote. La phase organique a alors été diluée avec 25 ml de dichlorométhane puis séparée de la phase aqueuse et lavée successivement avec une solution aqueuse d'acide chlorhydrique (30 ml d'acide 0,01 N) puis avec de l'eau. La phase organique a été séchée sur $MgSO_4$ après quoi on a chassé les solvants et recueilli, avec un rendement de 100 % par rapport au DOPO de départ, de l'oxyde de benzyl dioctyl phosphine. Ce produit a été recristallisé dans un mélange acétone-eau après quoi on a obtenu une poudre blanche fondant à 59-60 °C et possédant les spectres suivants :

Infra-Rouge : bande à 1 165 $cm^{-1}$ (P = 0)
bande à 1 600 $cm^{-1}$ (phényle)

R.M.N. : singulet (5H, $C_6H_5$) à 7,28 ppm
doublet (2H, $CH_2$) à 3,08 ppm
multiplet (34H, $2C_8H_{17}$) entre 1,53 et 0,85 ppm.

L'analyse élémentaire conduit bien au composé $C_{23}H_{41}OP$ :

| | C | H | O | P |
|---|---|---|---|---|
| % calculé | 75,83 | 11,26 | 4,40 | 8,51 |
| % trouvé | 75,7 | 11,2 | 4,4 | 8,7 |

## Exemple 2

L'expérience précédente a été reprise en tout point à ceci près que l'agitation a duré 4 heures et que le TBAH a été remplacé par le cryptant <222>. On a encore obtenu un rendement de 100 % en un produit en tout point identique au précédent.

Exemple 3

A titre de comparaison, on a effectué la même expérience que précédemment décrit en n'utilisant ni TBAH, ni <222>.

Le rendement de la réaction est nul même à 80 °C, après 6 heures.

Exemples 4 à 6

On a étudié l'influence de la concentration de la base minérale dans la phase aqueuse.

On a pour cela effectué la réaction en agitant un mélange à 65 °C de 8,70 mM de chlorure de benzyle, de 5,30 mM de DOPO, de 0,164 mM de TBAH, de 5 ml de soude aqueuse à 50 % en poids, de 5,11 mM d'un décane et de 15 ml de toluène.

On a mesuré la variation de concentration du chlorure de benzyle restant dans la phase organique en fonction du temps.

Les résultats sont rapportés au tableau 1 suivant :

| Temps (min) | Concentration chlorure de benzyle (en mM) | Taux de conversion (en %) |
|---|---|---|
| 0 | 9,128 | 0 |
| 10 | 8,036 | 20,6 |
| 20 | 6,677 | 46,3 |
| 30 | 5,960 | 59,8 |
| 60 | 5,593 | 66,8 |
| 90 | 5,147 | 74,6 |
| 120 | 4,876 | 80,3 |

On voit que le rendement est déjà excellent au bout de deux heures. On a ensuite suivi la même procédure, mais avec de la soude à 30 %. Pour cela, on a agité un mélange maintenu à 65 °C, de 8,70 mM de chlorure de benzyle, de 5,28 mM de DOPO, de 0,160 mM de TBAH, de 5 ml de NaOH aqueuse à 30 % en poids, de 5,13 mM d'un décane et de 15 ml de toluène.

Les résultats obtenus sont consignés dans le tableau 2 suivant :

| Temps. (min) | Concentration chlorure de benzyle (en mM) | Taux de conversion (en %) |
|---|---|---|
| 0 | 8,630 | 0 |
| 10 | 8,351 | 5,3 |
| 30 | 7,983 | 12,3 |
| 60 | 7,490 | 21,6 |
| 120 | 6,762 | 35,4 |
| 180 | 5,910 | 51,5 |

On voit qu'avec NaOH à 30 %, le rendement ne commence à atteindre une valeur convenable qu'au bout de 3 heures.

Enfin, on a effectué une opération comparable aux deux précédentes en utilisant de la soude à 10 % en poids. La conversion est nulle au bout de 3 heures.

En fait, on ne peut obtenir de conversion notable qu'avec une base minérale présente à raison de plus de 20 % en poids dans la phase aqueuse.

Exemples 7 à 9

On a étudié l'influence de la température dans le procédé selon l'invention. Le tableau 1 précédent regroupe les résultats obtenus à 65 °C.

On a par ailleurs agité un mélange à 50 °C constitué de 8,70 mM de chlorure de benzyle, de 5,310 mM de DOPO, de 5,132 mM d'undécane, de 0,162 mM de TBAH, de 5 ml de soude aqueuse à 50 % et de 15 ml de toluène.

Les résultats enregistrés au cours du temps sont consignés dans le tableau 3 suivant :

| Temps (min) | Concentration chlorure de benzyle (en mM) | Taux de conversion (en %) |
|---|---|---|
| 0 | 9,085 | 0 |
| 10 | 8,103 | 18,5 |
| 20 | 7,175 | 36,0 |
| 30 | 6,528 | 48,1 |
| 60 | 4,506 | 86,2 |

On voit qu'à 50 °C le procédé donne des résultats au moins aussi bons qu'à 65 °C, pour l'oxyde de dioctyl benzyl phosphine.

On a aussi opéré à 25 °C, sur un mélange de 5,388 mM de chlorure de benzyle, de 5,293 mM de DOPO, de 5,120 mM d'undécane, de 0,160 mM de TBAH, de 5 ml de soude aqueuse à 50 % et de 30 ml de toluène.

On a trouvé que la conversion n'est que de 21,3 % au bout d'une heure. La plage optimale de température semble se situer entre 40 et 70 °C, environ.

Exemples 10 à 13

On a essayé divers catalyseurs de transfert de phase de type ionique. On a ainsi agité à 65 °C un mélange de 8,699 mM de chlorure de benzyle, de 5,295 mM de DOPO, de 5,129 mM d'undécane, de 5 ml de NaOH aqueuse à 50 %, de 15 ml de toluène et 0,167 mM de bromure de tétraéthylammonium, $Et_4N^+ Br^-$.

L'évolution de la réaction en fonction du temps est rapportée au tableau 5 suivant :

| Temps (min) | Concentration chlorure de benzyle (en mM) | Taux de conversion (en %) |
|---|---|---|
| 0 | 8,711 | 0 |
| 15 | 8,502 | 4 |
| 30 | 8,360 | 7 |
| 60 | 7,803 | 17 |
| 90 | 7,616 | 21 |
| 120 | 7,031 | 31 |
| 150 | 6,429 | 43 |

La réaction est plus lente qu'avec TBAH.

On s'est placé dans les mêmes conditions que dans l'essai précédent en utilisant toutefois un catalyseur différent, le chlorure de tétraphénylphosphonium.

Au bout d'une heure, le taux de conversion est de 17 %.

On a fait encore la même expérience en utilisant cette fois le chlorure de tétraphénylarsonium. Ce catalyseur est, comme le précédent, sensible à une température de 65 °C à laquelle le taux de conversion est de 10 % au bout de trois heures.

On a effectué enfin un essai avec le chlorure de tétraheptylammonium. On a agité pour cela à 65 °C un mélange de 5,436 mM de chlorure de benzyle, de 5,297 mM de DOPO, de 5,153 mM d'undécane, de 5 ml de NaOH aqueuse à 50 % ; de 15 ml de toluène et de 0,163 mM de $(C_7H_{15})_4NCl$. Les résultats recueillis en fonction du temps sont consignés dans le tableau 6 suivant :

| Temps (min) | Concentration chlorure de benzyle (en mM) | Taux de conversion (en %) |
|---|---|---|
| 0 | 4,939 | 0 |
| 30 | 3,150 | 36,2 |
| 60 | 1,932 | 60,9 |
| 120 | 1,470 | 70,2 |
| 180 | 1,260 | 74,5 |

Exemple 14

On a utilisé cette fois-ci de la potasse comme base minérale.

On a agité pendant 3 heures à 65 °C, un mélange de 7,9 mM de chlorure de benzyle, de 5,3 mM de DOPO, de 0,16 mM de TBAH, de 5 ml de KOH aqueuse à 50 % en poids et de 15 ml de toluène.

On a enregistré un rendement de 100 %.

Exemples 15 à 17

On s'est placé dans les mêmes conditions qu'à l'exemple 1 en remplaçant le TBAH, catalyseur de transfert de phase ionique par divers catalyseurs de transfert de phase du type complexants macrohétérocycliques.

On a ainsi utilisé les cryptants <222> (ou 4,7,13,16,21,24, hexaoxa-1,10-diazabicyclo (8,8,8)-hexacosane) et <222 BB> (ou 5,6,14,15-dibenzo-4,7,13,16,21,24-hexaoxa-1,10-diazabicyclo (8,8,8)-hexacosane) et l'éther-couronne DCHE (ou dicyclohexyl-18-couronne-6).

Les résultats obtenus en fonction du temps sont rapportés dans le tableau 7 suivant :

| Catalyseur / Taux de conversion | <222> | <222 BB> | DCHE |
|---|---|---|---|
| après 0,5 h | 20% | 13% | - |
| après 1 h | 39% | 24% | 11% |
| après 1,5 h | 53% | 34% | 19% |
| après 2 h | 65% | 45% | 20% |
| après 2,5 h | 79% | 47% | 28% |

(suite)

| Catalyseur / Taux de conversion | <222> | <222 BB> | DCHE |
|---|---|---|---|
| après 3 h | -- | 43% | 34% |
| après 3,5 h | 93% | 57% | 42% |
| après 4 h | 100% | 61% | 44% |
| après 4,5 h | - | - | 53% |

On voit que le <222 BB> et le DCHE donnent des résultats satisfaisants mais que seul le <222> rivalise avec le sulfate acide de tétrabutylammonium.

Exemple 18

On a remplacé, dans l'exemple 1, le DOPO par de l'oxyde de diphényl phosphine. On a opéré à 65 °C et agité pendant 3 heures un mélange de 9,98 mM d'oxyde de diphényl phosphine, de 14,97 mM de chlorure de benzyle, de 10 ml de soude aqueuse à 50 %, de 0,5 mM de TBAH et de 20 ml de toluène.

Le produit brut a été traité comme à l'exemple 1 mais recristallisé dans le toluène. On a obtenu 1,635 g de produit en cristaux blancs, fondant à 189-190 °C, identifié par ses spectres comme étant bien de l'oxyde de diphényl benzyl phosphine. Le rendement était de 56 % (oxyde).

Spectre Infra-Rouge : bandes à 1 600 et 1 490 $cm^{-1}$ (phényl)
bande P = 0 à 1 175 $cm^{-1}$

Spectre R.M.N. : 10 H à 7,55 ppm (2 groupes phényle)
5 H à 7,22 ppm (1 groupe benzyle)
2 H à 3,80 et 3,60 ppm (méthylène).

Exemple 19

La procédure de l'exemple 1 a été reprise avec 5,47 mM de chlorure d'octyle, 3,65 mM de DOPO, 5 ml de soude aqueuse à 50 %, 0,18 mM de TBAH et 10 ml de toluène.

La réaction est arrêtée au bout de 6 heures. On a éliminé l'excès de DOPO par 3 lavages à l'acétone à − 15 °C.

La purification et la récupération s'effectuent comme à l'exemple 1, sauf qu'on a recristallisé dans l'éther de pétrole.

On a obtenu 0,547 g (39 % de rendement) de trioctyl phosphine oxyde (TOPO) fondant à 52 °C.

Exemple 20

On a opéré comme à l'exemple 1 mais avec 5,5 mM de chloro-3 propionitrile. Au bout de 5 heures à 65 °C, on a obtenu une huile sombre. Le produit a été distillé à 170 °C sous $2.10^{-5}$ mm Hg et sous azote. Le rendement final est de 74 % en oxyde de dioctyl propionitrile phosphine, fondant à 44-45 °C présentant en infra-rouge une bande C ≡ N à 2 215 $cm^{-1}$ et une bande P = 0 à 1 140 $cm^{-1}$, mais pas de bande P—H. On observe en RMN un triplet à 2,74 ppm correspondant au méthylène adjacent au C ≡ N.

L'analyse élémentaire est la suivante :

| | C | H | O | N | P |
|---|---|---|---|---|---|
| % calculé | 69,73 | 11,62 | 4,89 | 4,28 | 9,47 |
| % trouvé | 69,45 | 11,59 | 4,89 | 4,22 | 9,20 |

Exemple 21

On a opéré comme à l'exemple 1 avec le bromure d'allyle. Après 4 heures d'agitation à 65 °C on a traité la phase organique comme à l'exemple 1 et obtenu un rendement brut de 99 %. Le produit brut a été recristallisé dans le mélange acétone-eau et le rendement est alors de 73 % en produit fondant à 63-65 °C.

On a finalement recristallisé encore deux fois dans l'éther de pétrole et le rendement final est de 61 % (0,702 g de produit).

Le produit obtenu, l'oxyde de dioctyl allyle phosphine est un produit nouveau. Il fond à 73,5-74 °C.

Son spectre Infra-Rouge présente une bande CH = CH à 1 628 $cm^{-1}$ et une bande P = 0 à 1 150 $cm^{-1}$.

Son spectre comprend :

1 multiplet 1 H ( = CH— ) à 5,97 ppm
1 triplet 2 H ( $—CH_2$ = ) à 5,30 ppm
1 triplet 2 H ( $—CH_2—$ ) à 4,54 ppm
1 multiplet 34 H ($2C_8H_{17}$) entre 0,88 et 1,65 ppm.

Le produit, de formule

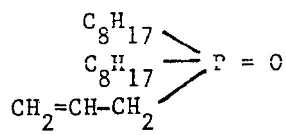

est hygroscopique.

Exemple 22

La procédure de l'exemple 1 a été appliquée à 1,46 mM de dichloro-1,4 butène-2, 3,65 mM de DOPO, 5 ml de soude aqueuse à 50 %, 0,146 mM de TBAH et 10 ml de toluène.

Après 6 heures à 65 °C on a séparé et traité la phase organique comme à l'exemple 1. L'excès de DOPO a été éliminé par deux lavages à l'acétone à – 20 °C après quoi on a dissous le produit dans le cyclohexane puis on l'a récupéré par refroidissement (précipité).

On a obtenu un mélange constitué de 91 % de composé nouveau de formule :

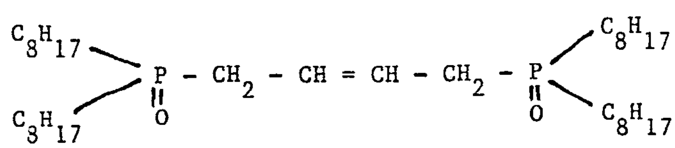

caractérisé par son spectre Infra-Rouge :

Bande CH = CH à 1 650 $cm^{-1}$
Bande P = 0 à 1 140 $cm^{-1}$

et de 9 % de composé nouveau de formule :

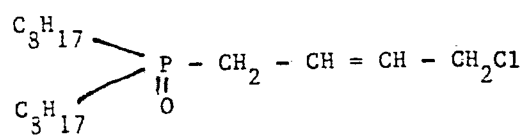

Le rendement total est de 37 %.

Exemple 23

On a opéré comme à l'exemple 1 sur 2,83 mM de di(p-chlorométhyl phényl)éther, 7,07 mM de DOPO, 10 ml de soude aqueuse à 50 %, 0,283 mM de TBAH et 30 ml de toluène.

Après 6 heures d'agitation à 65 °C on traite le mélange comme à l'exemple 1 et on récupère 1,325 g d'un mélange de produits nouveaux (rendement total : 69 %) :

75 % de 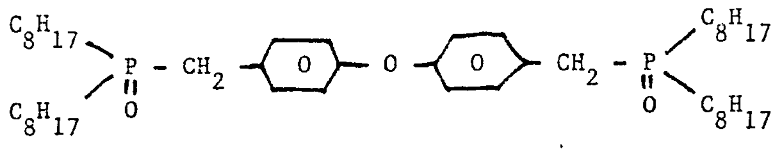

et

25 % de 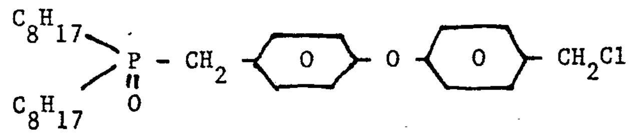

Le mélange est caractérisé par son spectre IR :

bandes 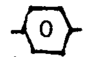 à 1 600 et 1 495 $cm^{-1}$

bande 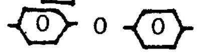 à 1 230 $cm^{-1}$

bande P = 0 à 1 150 $cm^{-1}$
pas de bande P—H.

Exemple 24

On a opéré comme à l'exemple 1 sur 7,2 mM de DOPO, 30 ml de toluène, 2,9 mM de di(chlorométhyl) 1,4-benzène, 5 ml de soude aqueuse à 50 % et 0,29 mM de TBAH.

Après agitation pendant 4 heures à 65 °C on a obtenu avec un rendement de 98 % le composé de formule :

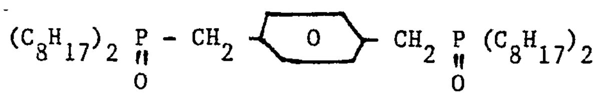

Ce composé nouveau fond à 86-88 °C et a été identifié par son spectre infra-rouge (bande P = 0 à 1 160 $cm^{-1}$ et bande $C_6H_4$ à 1 505 cm $^{1}$), son spectre RMN (doublet 4 H de $C_6H_4$ à 7,24 ppm, doublet 4 H de 2 $CH_2$ à 3,08 ppm, multiplet 68 H de 4$C_8H_{17}$ entre 0,86 et 1,55 ppm) et son analyse élémentaire :

| $C_{40}H_{76}O_2P_2$ | C | H | O | P |
|---|---|---|---|---|
| % calculé | 73,85 | 11,69 | 4,92 | 9,53 |
| % trouvé | 73,9 | 11,7 | 4,5 | 9,6 |

Exemple 25

On a utilisé comme dérivé halogéno méthylé un copolymère statistique de styrène et de p-chlorométhyl styrène comportant

1,9 (x = 1,9) motif 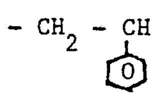 pour 1,0 (y = 1,0) motif 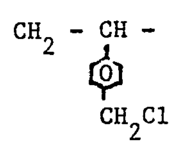

Le rapport x : y était donc 1,9 : 1 et la masse moléculaire du copolymère était 170 000.

On a ajouté 1,76 mM de DOPO et 0,07 mM de TBAH à un mélange biphasé de 50 ml de solution toluénique dudit polymère contenant 1,4 mM de chlore et de 4 ml de soude aqueuse à 50 %.

Le mélange a été agité pendant 3 heures à 65 °C. Le polymère obtenu a été récupéré après précipitation dans le méthanol et purifié par deux cycles successifs de dissolution dans le chloroforme et reprécipitation avec du méthanol.

Le polymère ainsi obtenu a été séché sous vide poussé, puis analysé.

Le polymère comprenait 1,9 groupe

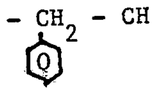 par groupe 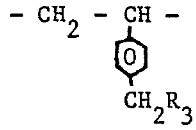

43 % de ces derniers étant du type $R_3 = Cl$ et 57 % du type $R_3 = PO\ (C_8H_{17})_2$.

Le degré de substitution était donc égal à 57 %. Cette analyse a été effectuée par Infra-Rouge où la bande $CH_2Cl$ est située à 1 265 $cm^{-1}$ et la bande $P = 0$ à 1 165 $cm^{-1}$ et par analyse élémentaire.

La masse du polymère substitué était de 235 000, par osmométrie contre 236 000 théoriquement. On en déduit que le procédé selon l'invention ne dégrade pas les chaînes.

Exemple 26

On a réitéré l'expérience de l'exemple précédent en remplaçant les 0,07 mM de TBAH par 0,07 mM de <222>, et le toluène par du benzène. La température de réaction a été abaissée à 60 °C mais la durée poussée jusqu'à 16 heures. On a obtenu un polymère de structure non dégradée analogue à celle du polymère de l'exemple 25 mais où le taux de substitution atteint 77 % (déterminé par Infra-Rouge et analyse élémentaire).

Exemple 27

On a repris l'essai de l'exemple 25 sur une résine où x = 2,05 et y = 1,0, mais on a utilisé un système d'agitation plus violent. Le polymère obtenu présentait un degré de substitution de 86 % et sa masse molaire mesurée par osmométrie était de 300 000.

Exemple 28

On a utilisé comme dérivé halogéno méthylé, une résine de Merrifield réticulée avec 2 % de divinyl benzène comprenant

6,8 (x = 6,8) groupes 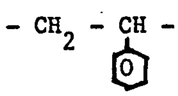 et 16,2 (y = 16,2) groupes 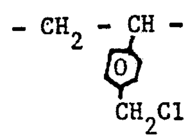

par groupe 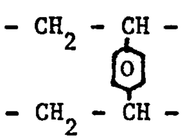 (z = 1,0)

Cette résine avait une porosité comprise entre 200 et 400 mesh. On a opéré comme à l'exemple 25, à 60 °C, pendant 4 heures, avec 1,277 g de résine de Merrifield, 7,81 mM de DOPO, 1,25 mM de TBAH, 6 ml de soude à 50 % et dans 35 ml de toluène. En outre, on avait fait gonfler la résine préalablement pendant 24 heures dans le toluène. La résine substituée obtenue présentait la même structure qu'au départ, mais les groupes

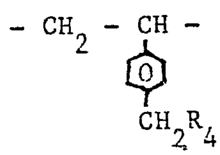

étaient pour 5 % d'entre eux du type $R_4 = Cl$, et pour 95 % du type

$$R_4 = -\underset{O}{\overset{}{\underset{\|}{P}}}\ (C_8H_{17})_2.$$

Exemple 29

On a voulu montrer que le milieu organique dans le procédé selon l'invention pouvait ne pas contenir de solvant. La réaction a donc été effectuée en masse en agitant violemment pendant 3 heures à 65 °C, 34,77 mM de chlorure de benzyle, 3,65 mM de DOPO, 0,11 mM de TBAH et 4 ml de soude à 50 %. La phase

organique a été traitée comme à l'exemple 1. On a obtenu 1,44 g de produit brut, soit un rendement quantitatif.

Le spectre Infra-Rouge de ce produit correspondait à l'oxyde de dioctyle benzyl phosphine :

— bandes à 1 600 et 1 490 $cm^{-1}$ (phényle)

— bande à 1 170 $cm^{-1}$ (P = 0)

— pas de bande PH vers 2 300 $cm^{-1}$.

**Revendications**

1. Procédé de synthèse d'oxydes de phosphines tertiaires à partir d'un oxyde de phosphine secondaire et d'un dérivé halogéno méthylé en présence d'une base, caractérisé en ce qu'on fait réagir, sous agitation, dans un milieu organique, non miscible à l'eau, un oxyde de phosphine secondaire sur un dérivé halogéno méthylé, en présence d'une phase aqueuse renfermant une base minérale, en présence d'un catalyseur de transfert de phase choisi dans le groupe constitué par les sels d'ammonium, de phosphonium ou d'arsonium quaternaires de formule générale :

$$A_1A_2A_3A_4\ Y^+,\ X^-$$

où Y = N, P ou As,
où $A_1$, $A_2$, $A_3$ et $A_4$ sont identiques ou différents et sont de préférence des groupes alkyle de $C_1$ à $C_8$, des groupes benzyle ou des chaînes de polymère et où $X^-$ est un anion ou dans le groupe constitué par les polyoxydes d'éthylène, les éthers-couronnes et les cryptants.

2. Procédé selon la revendication 1, caractérisé en ce que l'oxyde de phosphine secondaire a pour formule générale :

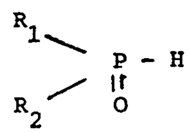

où $R_1$ et $R_2$ sont identiques ou différents et sont un groupe alkyle linéaire ou ramifié comportant de 1 à 18 atomes de carbone, de préférence de 1 à 12 atomes de carbone ou encore un groupe phényle.

3. Procédé selon l'une quelconque des revendications 1 ou 2, caractérisé en ce que le dérivé halogéno méthylé a pour formule générale $XCH_2R$ dans laquelle :

X est un atome de chlore ou de brome et,

R est un groupe —CH = CHY où Y est un atome d'hydrogène, un groupe phényle ou un groupe —$CH_2X$ dans lequel X a l'une des significations indiquées plus haut ou bien,

R est un groupe

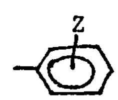

où Z est un atome d'hydrogène, un groupe alkyle de $C_1$ à $C_4$, un groupe vinyle, un atome d'halogène, un groupe —$CH_2X$ ou un groupe

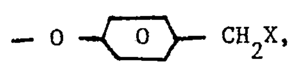

X ayant l'une des significations indiquées plus haut, ou bien,

R est une chaîne alkyle comprenant de 1 à 12 atomes de carbone, éventuellement substituée par au moins un groupe nitrile ou époxy, ou bien,

R est un groupe phényle faisant partie d'une chaîne de copolymère statistique de styrène et de p-halogéno méthyl styrène de masse moléculaire comprise entre 500 et 1 000 000 et comprenant x et y motifs

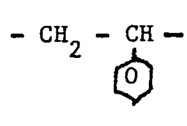

et

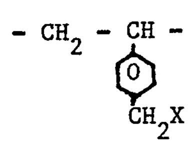

respectivement, x et y étant des nombres entiers tels que le rapport x : y soit compris entre 100 : 1 et 0 : 1, ou bien encore,

R est un groupe phényle faisant partie d'une chaîne de copolymère statistique de styrène et de halogéno méthyl styrène, partiellement réticulé, dite de Merrifield, de masse moléculaire comprise entre 1 000 et 1 000 000 et comprenant x, y et z motifs

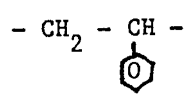 , 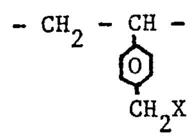 et 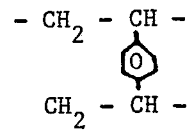

respectivement x, y et z étant des nombres entiers tels que le rapport x : y soit compris entre 100 : 1 et 0 : 1 et que le rapport z : y soit compris entre 1 : 25 et 1 : 5.

4. Procédé selon l'une quelconque des revendications 1 à 3, caractérisé en ce que la phase aqueuse renfermant une base minérale est une solution aqueuse renfermant de 30 à 60 % en poids de soude ou de potasse.

5. Procédé selon l'une quelconque des revendications précédentes, caractérisé en ce que la réaction est effectuée entre 40 et 70 °C.

6. Procédé selon l'une quelconque des revendications précédentes, caractérisé en ce que le rapport des volumes de phase aqueuse et de phase organique est compris entre 5 : 1 et 1 : 10.

7. Procédé selon l'une quelconque des revendications précédentes, caractérisé en ce que la concentration des réactifs dans la phase organique est comprise entre 0,1 et 20 %.

8. Procédé selon l'une quelconque des revendications précédentes, caractérisé en ce que la proportion de catalyseur de transfert de phase par rapport au dérivé halogéno méthylé est comprise entre 1 et 10 % en mole, de préférence voisine de 5 % en mole.

9. Les oxydes de phosphines tertiaires de formule générale :

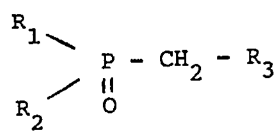

où $R_1$ et $R_2$ sont identiques ou différents et sont un groupe alkyle linéaire ou ramifié comportant de 1 à 18 atomes de carbone, de préférence de 1 à 12 atomes de carbone ou un groupe phényle et où $R_3$ est choisi dans le groupe constitué par :

a) un groupe phényle figurant dans un des motifs

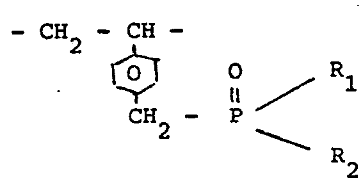

d'un copolymère statistique dérivé d'un copolymère statistique de styrène et de p-halogéno méthyl styrène, de masse moléculaire comprise entre 550 et 1 100 000, comprenant x et y motifs

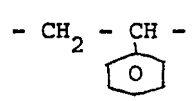 et 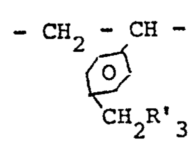

respectivement, x et y étant des nombres entiers tels que le rapport x : y soit compris entre 100 : 1 et 0 : 1, 20 à 90 % en nombre des $R_3'$ étant un groupe

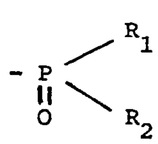

et 10 à 80 % un atome de chlore ou de brome,

b) un groupe phényle figurant dans un des motifs

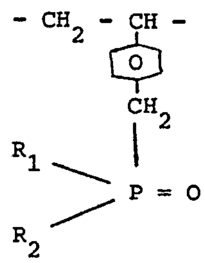

d'un copolymère statistique dérivé d'un copolymère statistique de styrène et de p-halogéno méthyl styrène partiellement réticulé, dit de Merrifield, de masse moléculaire comprise entre 1 100 et 1 100 000, comprenant x, y et z motifs

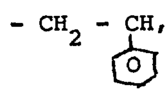 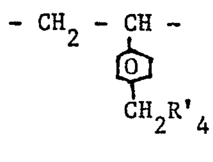 et 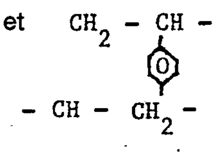

respectivement, x, y et z étant des nombres entiers tels que le rapport x : y soit compris entre 100 : 1 et 0 : 1 et que le rapport z : y soit compris entre 1 : 25 et 1 : 5, 20 à 95 % en nombre des $R'_4$ étant des groupes

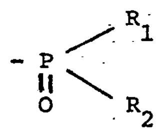

5 à 80 % des atomes de chlore ou de brome.

**Claims**

1. Process for the synthesis of tertiary phosphine oxides from a secondary phosphine oxide and a halogenomethyl derivative, in the presence of a base, characterised in that a secondary phosphine oxide is reacted with a halogenomethyl derivative in a water-immiscible organic medium, with stirring, in the presence of an aqueous phase containing an inorganic base, and in the presence of a phase transfer catalyst selected from the group consisting of the quaternary ammonium, phosphonium or arsonium salts of the general formula

$$A_1A_2A_3A_4\ Y^+,\ X^-$$

in which Y = N, P or As

$A_1$, $A_2$, $A_3$ and $A_4$ are identical or different and are preferably $C_1$ to $C_8$ alkyl groups, benzyl groups or polymer chains, and $X^-$ is an anion, or from the group consisting of polyethylene oxides, crown ethers and cryptands.

2. Process according to claim 1, characterised in that the secondary phosphine oxide has the general formula :

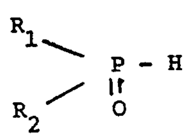

in which $R_1$ and $R_2$ are identical or different and are a linear or branched alkyl group containing from 1 to 18 carbon atoms, preferably from 1 to 12 carbon atoms, or a phenyl group.

3. Process according to either one of claims 1 or 2, characterised in that the halogenomethyl derivative has the general formula $XCH_2R$, in which :

X is a chlorine or bromine atom and

R is a group —CH = CHY, in which Y is a hydrogen atom, a phenyl group or a group —$CH_2X$, in which X has one of the meanings indicated above, or alternatively,

R is a group

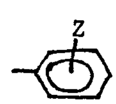

in which Z is a hydrogen atom, a $C_1$ to $C_4$ alkyl group, a vinyl group, a halogen atom, a group $-CH_2X$ or a group

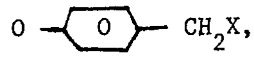

X having one of the meanings indicated above, or alternatively

R is an alkyl chain containing from 1 to 12 carbon atoms, which is optionally substituted by at least one nitrile or epoxy group, or alternatively

R is a phenyl group forming part of a random copolymer chain containing styrene and a p-halogenomethylstyrene, which has a molecular weight of between 500 and 1,000,000 and comprises x and y units

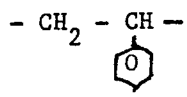 and 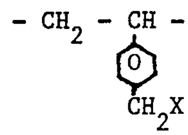

respectively, x and y being integers such that the ratio x : y is between 100 : 1 and 0 : 1, or alternatively

R is a phenyl group forming part of a random copolymer chain containing styrene and a halogenomethylstyrene, which is partially crosslinked, is referred to as a Merrifield resin, has a molecular weight of between 1,000 and 1,000,000 and comprises x, y and z units

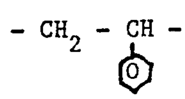, 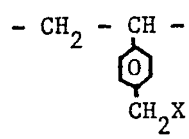 and 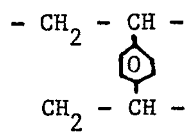

respectively, x, y and z being integers such that the ratio x : y is between 100 : 1 and 0 : 1 and such that the ratio z : y is between 1 : 25 and 1 : 5.

4. Process according to any one of claims 1 to 3, characterised in that the aqueous phase containing an inorganic base is an aqueous solution containing from 30 to 60 % by weight of sodium hydroxide or potassium hydroxide.

5. Process according to any one of the preceding claims, characterised in that the reaction is carried out at between 40 and 70 °C.

6. Process according to any one of the preceding claims, characterised in that the ratio of the volume of aqueous phase to the volume of organic phase is between 5 : 1 and 1 : 10.

7. Process according to any one of the preceding claims, characterised in that the concentration of the reactants in the organic phase is between 0.1 and 20 %.

8. Process according to any one of the preceding claims, characterised in that the proportion of phase transfer catalyst, relative to the halogenomethyl derivative, is between 1 and 10 mol %, preferably of the order of 5 mol %.

9. The tertiary phosphine oxides of the general formula

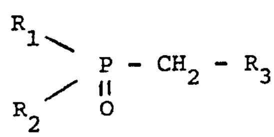

in which $R_1$ and $R_2$ are identical or different and are a linear or branched alkyl group containing from 1 to 18 carbon atoms, preferably from 1 to 12 carbon atoms, or a phenyl group, and $R_3$ is selected from the group consisting of :

a) a phenyl group forming part of one of the units

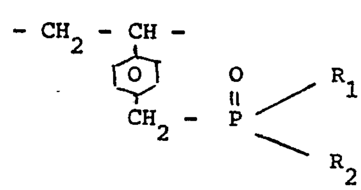

of a random copolymer derived from random copolymer of styrene and a p-halogenomethylstyrene, which has a molecular weight of between 550 and 1,100,000 and comprises x and y units

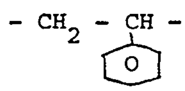

and

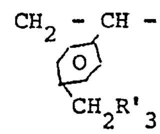

respectively, x and y being integers such that the ratio x : y is between 100 : 1 and 0 : 1, 20 to 90 % by number of the $R_3'$ groups being a group

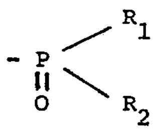

and 10 to 80 % being a chlorine or bromine atom, or

b) a phenyl group forming part of one of the units

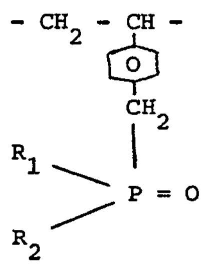

of a random copolymer derived from a random copolymer of sytrene and a p-halogenomethylstyrene, which is partially crosslinked, is referred to as a Merrifield resin, has a molecular weight of between 1,100 and 1,100,000 and comprises x, y and z units

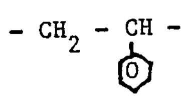

,

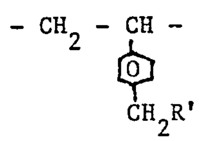

and

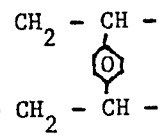

respectively, x, y and z being integers such that the ratio x : y is between 100 : 1 and 0 : 1 and such that the ratio z : y is between 1 : 25 and 1 : 5, 20 to 95 % by number of the $R'_4$ groups being groups

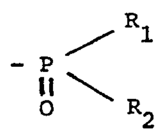

and 5 to 80 % being chlorine or bromine atoms.

**Ansprüche**

1. Verfahren zur Herstellung von tertiären Phosphinoxiden aus sekundären Phosphinoxiden und Methylhalogen-Derivaten in Gegenwart einer Base, dadurch gekennzeichnet, daß man in einem, nicht mit Wasser mischbaren, organischen Lösungsmittel, unter Rühren, ein sekundäres Phosphinoxid in Gegenwart einer wäßrigen Lösung einer starken Base und eines Phasenübergangskatalysators aus der Gruppe der quaternären Ammonium-, Phosphonium- oder Arsoniumsalzen der allgemeinen Formel

$$A_1A_2A_3A_4\ Y^+,\ X$$

worin Y für N, P oder As steht und $A_1$, $A_2$, $A_3$ und $A_4$, die gleich oder verschieden sind, vorzugsweise Alkylgruppen mit 1 bis 8 Kohlenstoffatomen, Benzylgruppen oder Polymerketten bedeuten und $X^-$ aus einem Anion oder aus Polyethylenoxiden, cyclischen Polyethern oder heterocyclischen Polyethern besteht, mit einem Methylhalogen-Derivat reagieren laßt.

2. Verfahren nach Anspruch 1, dadurch gekennzeichnet, daß man ein sekundäres Phosphinoxid der allgemeinen Formel

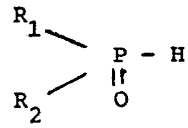

einsetzt, worin $R_1$ und $R_2$, die gleich oder verschieden sind, eine gerade oder verzweigte Alkylgruppe mit 1 bis 18, vorzugsweise 1 bis 12 Kohlenstoffatomen oder eine Phenylgruppe bedeuten.

3. Verfahren nach einem der Ansprüche 1 oder 2, dadurch gekennzeichnet, daß man ein Methylhalogen-Derivat der allgemeinen Formel $XCH_2R$ einsetzt, worin

X für ein Chlor- oder Bromatom steht,

R eine Gruppe $—CH = CHY$ bedeutet, worin Y ein Wasserstoffatom, eine Phenylgruppe oder eine Gruppe $—CH_2Cl$ oder $—CH_2Br$ darstellt, oder

R eine Gruppe

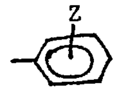

bedeutet, wobei Z ein Wasserstoffatom, eine Alkylgruppe mit 1 bis 4 Kohlenstoffatomen, eine Vinylgruppe, ein Halogenatom, eine Gruppe $—CH_2X$ oder eine Gruppe

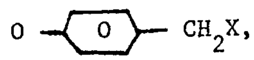

darstellt, wobei X ein Chlor- oder Bromatom bedeutet, oder

R eine Alkylkette mit 1 bis 12 Kohlenstoffatomen darstellt, die gegebenenfalls durch wenigstens eine Nitril- oder Epoxygruppe substituiert ist, oder

R eine Phenylgruppe bedeutet, die Teil einer Kette eines statistisch verteilten Copolymeren aus Styrol und p-Halogenmethylstyrol mit einem Molekulargewicht zwischen 500 und 1 000 000 ist, und aus x

Einheiten 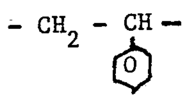

und y Einheiten 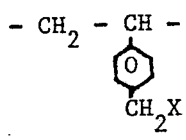 besteht,

wobei x und y ganze Zahlen sind und das Verhältnis von x : y zwischen 100 : 1 und 0 : 1 liegt, oder

R eine Phenylgruppe bedeutet, die Teil einer Kette eines statistisch verteilten, teilweise vernetzten (sog. Merrifield-Copolymeren aus Styrol und p-Halogenmethylstyrol mit einem Molekulargewicht zwischen 1 000 und 1 000 000 ist, und aus

x Einheiten 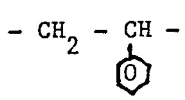 , y Einheiten 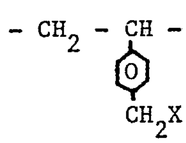 und z Einheiten 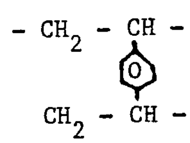

besteht, wobei x, y und z ganze Zahlen sind und das Verhältnis von x : y zwischen 100 : 1 und 0 : 1 und das von z : y zwischen 1 : 25 und 1 : 5 liegt.

4. Verfahren nach einem der Ansprüche 1 bis 3, dadurch gekennzeichnet, daß die wäßrige Phase einer starken Base eine wäßrige Lösung mit 30 bis 60 Gew.-% NaOH oder KOH ist.

5. Verfahren nach einem der vorstehenden Ansprüche, dadurch gekennzeichnet, daß man die Reaktion zwischen 40 und 70 °C ausführt.

6. Verfahren nach einem der vorstehenden Ansprüche, dadurch gekennzeichnet, daß das Volumenverhältnis der wäßrigen Phase zur organischen Phase zwischen 5 : 1 und 1 : 10 liegt.

7. Verfahren nach einem der vorstehenden Ansprüche, dadurch gekennzeichnet, daß die Konzentration der Reaktionspartner in der organischen Phase zwischen 0,1 und 20 Gew.-% liegt.

8. Verfahren nach einem der vorstehenden Ansprüche, dadurch gekennzeichnet, daß das Verhältnis des Phasenübergangskatalysators zum Methylhalogen-Derivat zwischen 1 und 10 mol.-% liegt, vorzugsweise in der Nähe von 5 mol.-%.

9. Tertiare Phosphinoxide der allgemeinen Formel

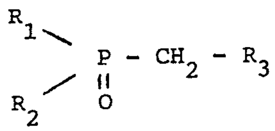

worin $R_1$ und $R_2$, die gleich oder verschieden sind, eine gerade oder verzweigte Alkylgruppe mit 1 bis 18, vorzugsweise 1 bis 12 Kohlenstoffatomen oder eine Phenylgruppe darstellen und $R_3$ eine der nachstehenden Bedeutungen hat :

a) eine Einheit

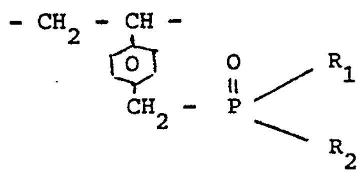

die Teil eines statistisch verteilten Copolymeren mit einem Molekulargewicht zwischen 550 und 1 100 000 ist und aus

x Einheiten 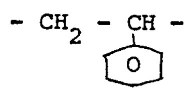 und y Einheiten 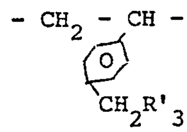

besteht, wobei x und y ganze Zahlen sind und das Verhältnis von x : y zwischen 100 : 1 und 0 : 1 liegt und in denen $R_3'$ zu 20 bis 90 % aus

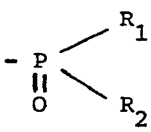

-Gruppen und zu 80 bis 10 % aus Chlor- oder Bromatomen besteht,

b) eine Einheit

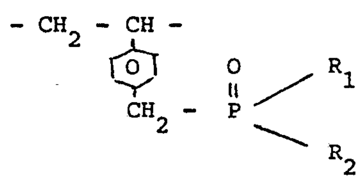

die Teil eines statistisch verteilten, teilweise vernetzten (sog. Merrifield-) Copolymeren aus Styrol und p-Halogenmethylstyrol mit einem Molekulargewicht zwischen 1 100 und 1 100 000 ist, das aus

x Einheiten 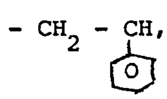 y Einheiten 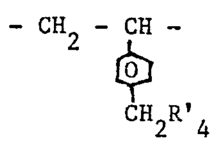 und z Einheiten 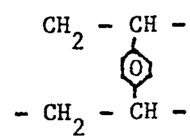

besteht, wobei x, y und z ganze Zahlen sind und das Verhältnis von x : y zwischen 100 : 1 und 0 : 1 und das von z : y zwischen 1 : 25 und 1 : 5 liegt und in denen $R'_4$ zu 20 bis 95 % aus

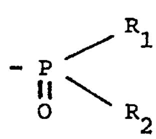

-Gruppen und zu 80 bis 5 % aus Chlor- oder Bromatomen besteht.